Europäisches Patentamt

(19) European Patent Office

Office européen des brevets

(11) Numéro de publication: **0 213 075**
**B1**

(12) **FASCICULE DE BREVET EUROPEEN**

(45) Date de publication du fascicule du brevet:
**16.05.90**

(51) Int. Cl.⁵: **B23B 31/20**

(21) Numéro de dépôt: **86810351.6**

(22) Date de dépôt: **12.08.86**

(54) **Dispositif de serrage d'une pièce ou d'une barre de matériau à usiner.**

(30) Priorité: **19.08.85 CH 3555/85**

(43) Date de publication de la demande:
**04.03.87 Bulletin 87/10**

(45) Mention de la délivrance du brevet:
**16.05.90 Bulletin 90/20**

(84) Etats contractants désignés:
**CH DE FR GB IT LI**

(56) Documents cités:
FR-A- 2 481 633
GB-A- 978 470
US-A- 3 643 969

(73) Titulaire: **Tornos-Bechler SA Fabrique de Machines Moutier, 111 rue Industrielle, CH-2740 Moutier (Kanton-Bern)(CH)**

(72) Inventeur: **Pruvot, François, Chemin de Ponfilet 82, CH-1093 La Conversion(CH)**
Inventeur: **Coste, Laurent, Vigneule 22, CH-2740 Moutier(CH)**
Inventeur: **Rebetez, Alain, Courtine 33, CH-2740 Moutier(CH)**

(74) Mandataire: **Rochat, Daniel Jean et al, Bovard SA Ingénieurs-Conseils ACP Optingenstrasse 16, CH-3000 Bern 25(CH)**

ACTORUM AG

## Description

La présente invention a pour objet un dispositif de serrage d'une barre de matériau à usiner, dans une broche de machine-outil, comprenant une pince et une douille de serrage de la pince, ces éléments étant associés à un corps de broche entraîné en rotation. Les tours automatiques modernes fonctionnent avec des vitesses de broche de plusieurs milliers de tours par minute. En outre, étant donné les capacités d'enlèvement des copeaux des outils modernes, les puissances mises en jeu au cours de l'usinage atteignent des valeurs beacoup plus élevées que par le passé. Il en résulte que le couple qui doit être transmis à la barre par la pince qui serre celle-ci dans la broche est d'une importance telle que les moyens de serrage de barre connus antérieurement, notamment ceux de type mécanique, actionnés par une came en forme de cloche, ne peuvent plus être utilisés. Un des défauts de ces systèmes antérieurs connus est que la force de serrage doit être transmise à travers un roulement à billes, ce qui, avec les exigences rappelées plus haut au sujet de la puissance à transmettre, présente de difficultés dans les machines modernes.

On a déjà proposé d'utiliser une transmission mixte pneumatique et hydraulique pour serrer une pince d'un porte-pièce dans une machine-outil (brevet suisse CH 563 828). Un piston primaire de grand diamètre actionné par air comprimé agit par son prolongement de petit diamètre dans une chambre hydraulique dont une partie secondaire est limitée par un piston secondaire qui subit ainsi une force multipliée. La disposition prévue comporte une commande à air comprimé lors du serrage et lors du desserrage, ce qui peut exiger des pressions d'air relativement élevées. En outre, les modalités d'application de ce système connu à une broche porte-pièce rotative, notamment à une broche tournant à grande vitesse ne sont pas révélées dans ce document.

On connaît d'autre part, dans une broche de tour (brevet US 3 643 969), une commande de desserrage de la pince, à partir d'un poussoir qui est déplacé axialement par une pression d'air comprimé, à l'encontre d'un ressort de serrage. Comme le manchon de commande de la pince tourne avec la broche alors que le poussoir ne se déplace que dans le sens axial, la commande implique un frottement entre des surfaces rotatives et des surfaces fixes, ce qui est incompatible avec les vitesses maximales des tours modernes.

Le but de la présente invention est donc de proposer un dispositif de serrage de barre du genre mentionné au début qui soit adapté aux exigences des tours automatiques modernes. Pour cela, la présente invention propose un dispositif de serrage d'une pièce ou d'une barre de matériau à usiner entraînée en rotation dans une machine-outil, comprenant un bâti fixe, une broche montée rotativement dans ce bâti et des moyens de commande montés dans le bâti pour commander le dispositif, dans lequel la broche comprend un corps de broche monté rotativement dans le bâti, une pince et une douille de serrage montées coaxialement dans le corps de broche et mobiles axialement l'une par rapport à l'autre entre une position relative d'ouverture et une position relative de fermeture, un ressort de serrage sollicitant la pince ou la douille à la fermeture, et des moyens d'actionnement à fluide agissant à l'encontre du dit ressort et associés partiellement au corps de broche et partiellement au bâti, caractérisé en ce que les dits moyens d'actionnement comprennent, associés à la broche, des moyens d'actionnement hydropneumatiques formés par un piston primaire capable d'effectuer un déplacement limité, dans une chambre pneumatique sous l'effet d'une pression d'air, et un piston secondaire capable d'effectuer un déplacement limité, dans une chambre hydraulique sous l'effet du refoulement dans cette chambre, d'un liquide entraîné par le piston primaire lors de son déplacement, ce dernier étant dans un rapport plus grand que le déplacement du piston secondaire, et dans le bâti au moins un conduit fixe d'alimentation de la chambre pneumatique en air, ce ou ces conduits traversant le bâti, et une communication à jeu calibré étant prévue entre le ou les dits conduits fixes et la dite chambre pneumatique.

On va décrire ci-après, à titre d'exemple, deux formes d'exécution de l'objet de l'invention en se référant au dessin annexé dont:

la fig. 1 est une vue en coupe schématique de la première forme d'exécution, et
la fig. 2 une vue en coupe légèrement simplifiée de la seconde forme d'exécution.

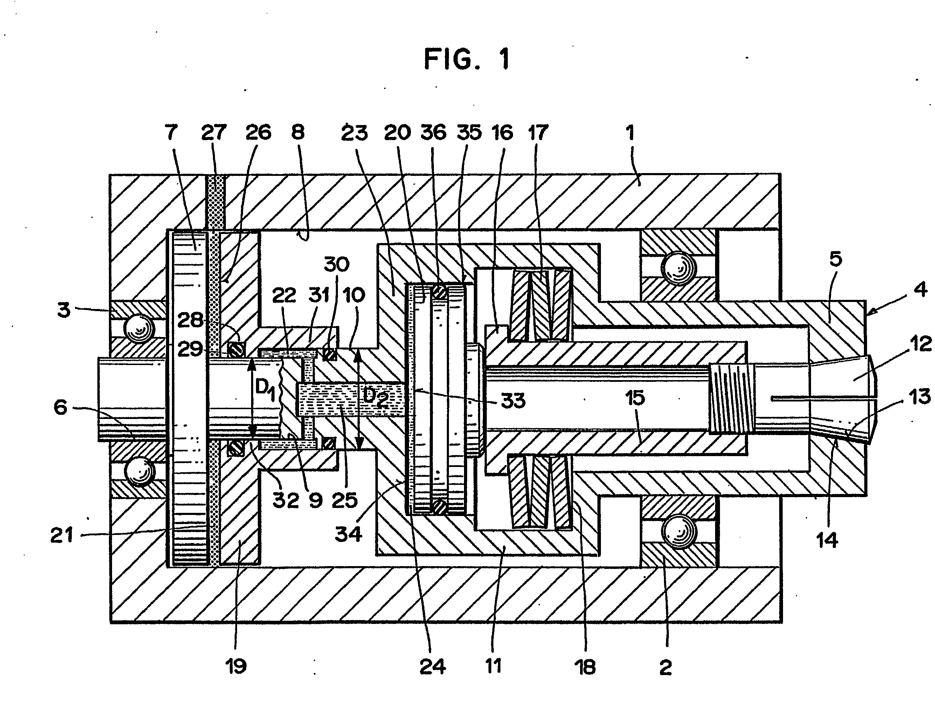

La fig. 1 représente schématiquement et partiellement un support de pièces dans un tour multibroche. Un support de broche 1 est représenté sous forme d'une pièce cylindrique qui supporte à chacune de ses extrémités deux paliers à billes 2 et 3. Ces paliers guident la broche désignée de façon générale par 4 et dont la pièce principale est un corps de broche 5. A sa partie arrière, ce corps de broche présente une portée 6 qui est engagée dans la bague interne du roulement 3. Bien que cela ne soit pas représenté au dessin, la broche se prolonge vers l'arrière soit jusqu'à une poulie, soit jusqu'à une couronne dentée ou à un accouplement le reliant à l'axe d'un moteur de façon à permettre son entraînement en rotation. En avant du roulement 3, le corps de broche 5 comporte une partie en forme de disque 7 qui est ajustée avec un jeu prédéterminé à l'alésage interne 8 du support de broche 1. Le jeu entre la périphérie de la partie 7 et l'alésage 8 sera déterminé par les conditions données plus loin.

En avant de la partie 7 le corps de broche 5 présente une partie cylindrique avec un premier segment cylindrique 9 ayant un premier diamètre D1 suivi d'un second segment, également cylindrique coaxial au premier, désigné par 10 et dont la portée cylindrique est usinée avec un second diamètre D2 plus grand que le diamètre D1. Comme on le verra plus loin, ces deux diamètres D1 et D2 jouent un rôle essentiel dans le fonctionnement du dispositif décrit. En avant du segment cylindrique 9/10, le corps de broche comporte une partie 11 en forme de cylindre qui contient une pince de serrage 12 et des éléments nécessaires à sa manoeuvre. La pince de serrage 12 comporte de façon connue en soi des mâchoires délimitées par des fentes (non représentées), et limitées extérieurement par des portions de surfaces tronconiques 13 qui se trouvent en regard d'une surface tronconique correspondante 14 ménagée dans l'extrémité du corps de broche 5. A son extrémité arrière, la pince 12 est fixée par vissage sur un manchon de manoeuvre 15 de forme cylindrique et dont l'extrémité arrière présente une collerette 16. Un organe élastique 17 formé par exemple par une série de rondelles ressort du type Schnorr, est logé entre la collerette 16 et un épaulement annulaire interne 18 du corps de broche 5. L'organe élastique 17 est monté avec un certain préarmage, de sorte qu'il presse les surfaces externes 13 de la pince 12 contre les surfaces internes tronconiques 14 de l'entrée du corps de broche. La pince est donc serrée radialement contre une pièce à usiner ou un segment de barre engagé dans le corps de broche. Elle est mobile axialement par rapport au segment 11 du corps de broche, dont la partie antérieure 14 joue le rôle de douille de serrage tout en étant fixe.

Le dispositif hydropneumatique qui permet la commande programmée de l'ouverture et de la fermeture de la pince 12 agit à l'encontre de la force du ressort 17 sur la pince elle-même. Ce dispositif comporte un piston primaire 19 et un piston secondaire 20. Le piston primaire délimite avec la partie en forme de disque 7 du corps de broche 5 et avec l'alésage interne 8 du support de broche 1 une chambre pneumatique 21. Il délimite aussi par son prolongement 31 et avec les deux portées 9 et 10 une chambre hydraulique primaire 22. Quant au piston secondaire 20, il délimite avec une paroi en forme de disque 23 du segment 11 une chambre hydraulique secondaire 24. Les chambres 22 et 24 sont en communication par un conduit interne 25 ménagé dans le corps de broche 5. De façon plus précise on voit que le piston primaire 19 présente une face active 26 de forme annulaire qui est située en regard de la partie 7 du corps de broche et qui délimite la chambre pneumatique 21. Cette chambre peut être alimentée en air comprimé par une ou plusieurs forures 27 ménagées dans la partie cylindrique du support de broche 1 et qui traversent l'alésage interne 8. Comme cette pièce est fixe, le jeu dont on a parlé précédemment entre les parties 19 ou 7 et l'alésage 8 doit être suffisant pour éviter tout contact accidentel tout en étant suffisamment réduit pour éviter des pertes d'air comprimé trop importantes au moment de la commande. Le piston primaire 19 comporte dans une gorge interne 28 un anneau d'étanchéité 29 qui rend étanche la chambre hydraulique 22 contre toute fuite dans le joint entre le piston primaire 19 et la portée 9 du corps de broche. Un second joint d'étanchéité 30 est prévu dans la portée 10 du corps de broche. Les joints 29 et 30 assurent l'étanchéité de la chambre hydraulique 22. La chambre 22 est délimitée par un alésage interne 31 du piston 19 qui est ajusté au diamètre D2, par la portée 9 ajustée au diamètre D1 et par l'alésage interne 32 du piston primaire qui est également ajusté à ce diamètre D1. En se déplaçant axialement sur les portées 9 et 10, le piston 19 augmente ou diminue le volume de la chambre 22. La variation de volume en fonction de la course peut être choisie à volonté, puisqu'elle ne dépend que de la différence entre les diamètres D1 et D2.

La chambre hydraulique secondaire 24 est limitée d'une part par une face active 33 du piston secondaire 20 et d'autre part par une face plane en forme de disque 34 ménagée à l'intérieur du corps de broche 5. Cette face 34 se trouve en regard de la face active 33 et a le même diamètre. On voit que le piston secondaire coulisse axialement dans un alésage 35 du corps de broche 5, la chambre secondaire 24 étant rendue étanche par un joint 36 logé dans une gorge annulaire.

Finalement le piston secondaire 20 appuie par sa partie centrale contre l'extrémité arrière du manchon de serrage 15, de sorte que ses déplacements axiaux se transmettent directement par contact au manchon 15 et à la pince 12.

La commande du serrage comporte l'envoi par les conduits 27 d'air comprimé à une pression suffisant dans la chambre pneumatique 21. La pression d'air comprimé agissant entre la partie 7 du corps de broche et la face active 26 du piston primaire provoque le déplacement vers la droite de ce piston primaire, ce qui réduit progressivement le volume de la chambre hydraulique primaire 22. L'huile contenue dans cette chambre est refoulée par le conduit 25 et parvient dans la chambre hydraulique 24. On remarque que le travail développé par l'air comprimé pour déplacer le piston 19 étant égal à celui qui déplace le piston 20, et le volume d'huile qui est extrait de la chambre 22 étant égal à celui qui pénètre dans la chambre 24, la course du piston 20 sera réduite par rapport à celle du piston 19 dans le rapport inverse de celui des sections des chambres hydrauliques 24 et 22. En revanche, les pressions étant égales dans tout le circuit hydraulique, la force avec laquelle le piston 20 agit sur l'organe élastique 17 pour le comprimer et déplacer ainsi la pince 12, est un multiple de celle qui s'oppose au déplacement du piston primaire 19.

Grâce à la disposition décrite, on peut obtenir une multiplication considérable de la force transmise au piston secondaire 20. La pression d'air qui agit sur le piston primaire 19 peut être relativement faible. Il en résulte que les pertes d'air en volume et en pression, à travers le jeu calibré prévu entre les pièces 1, 7 et 19 restent faibles. La commande pneumatique du système à travers le support de broche 1 est possible facilement sans perte excessive d'air comprimé.

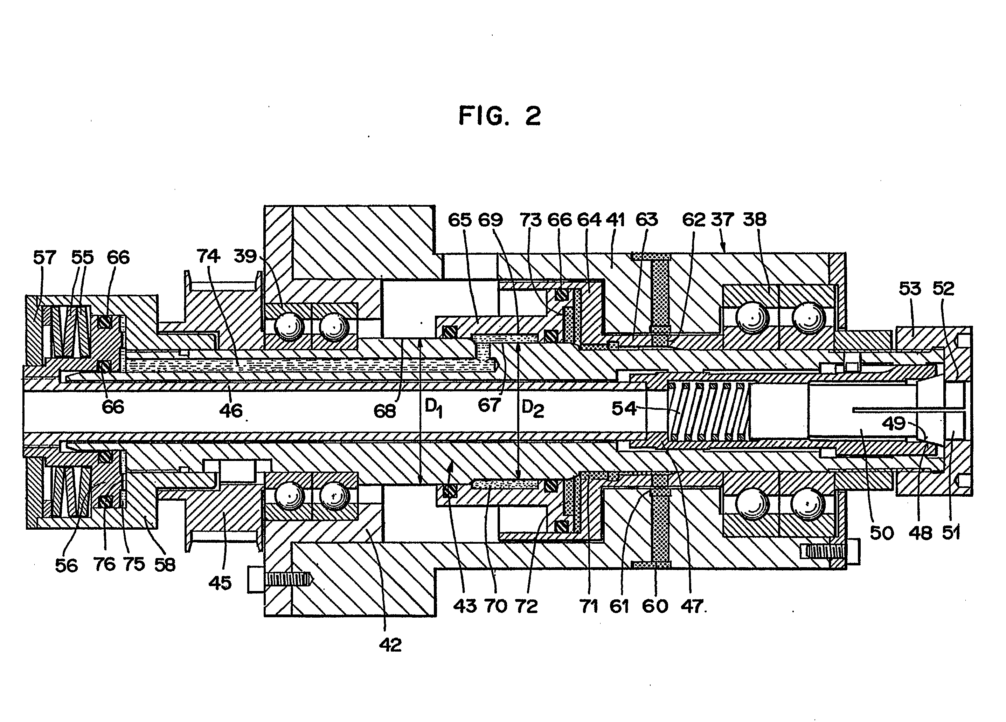

La fig. 2 représente une forme d'exécution du dispositif selon l'invention qui est appliquée à la poupée d'un tour automatique destiné à permettre l'usinage de séries de pièces dans une barre de matériau introduit dans la poupée depuis son extrémité arrière. La pièce 37 est un bâti de poupée et joue le rôle de support de broche. Elle est composée de plusieurs pièces assemblées, supportant deux paires de roulements à billes 38 et 39 correspondant aux roulements 2 et 3 de la première forme d'exécution. Un corps de broche 43 est supporté rotativement par les roulements 38 et 39. A l'intérieur de ce corps de broche est montée une pièce tubulaire 46 qui constitue une pièce de transmission de force et à l'extrémité avant de laquelle est fixée la douille de serrage proprement dite 47. Celle-ci présente à son extrémité avant une surface tronconique de serrage 48 qui coopère avec les surfaces tronconiques externes 49 de la pince 50. Cette dernière présente à l'avant des surfaces 49 une portée 51 qui est engagée dans une ouverture 52 d'un embout 53 fixé au corps de broche 43. Un ressort 54 tend à écarter la pince 50 de la douille de serrage 47 alors que le tube de transmission 46 et la douille de serrage 47 sont eux-mêmes sollicités vers l'avant par la force d'un organe élastique 55 constitué comme dans la première forme d'exécution par un empilage de rondelles à ressort de type Schnorr. Cet empilage de rondelles 55 est en effet serré avec un préarmage convenable entre une partie en forme de disque d'un piston secondaire 56 et une paroi annulaire 57 solidaire d'une pièce en forme de cylindre 58 qui est vissée sur l'extrémité arrière du corps de broche 43. Le piston secondaire 56 présente un prolongement cylindrique vers l'arrière qui est vissé sur un filetage ménagé à l'extrémité arrière du tube 46. Des moyens de blocage du filetage peuvent également être prévus, ils ne sont pas représentés au dessin. Ainsi, le cylindre 57, 58 étant solidaire du corps de broche 43, l'organe élastique 55 presse le piston secondaire 56 vers l'avant et par conséquent tend constamment à déplacer les pièces 46 et 47 vers l'avant. La pince 50 étant retenue par son épaulement frontal à l'intérieur de l'embout 53 qui est lui-même vissé sur le corps de broche 43, on voit que les éléments élastiques 55 ont pour tendance d'appuyer les surfaces internes 48 de la douille de serrage 47 contre les surfaces externes tronconiques 49 des mâchoires de la pince 50, ce qui tend à refermer cette pince sur une barre engagée à l'intérieur du tube 46 et de la pince 50.

Le dispositif hydropneumatique permettant la commande de l'ouverture et de la fermeture de la pince est légèrement différent de celui qui a été décrit en relation avec la fig. 1. Il comporte une alimentation en air comprimé réalisée par des conduits 60 ménagés radialement à travers la pièce fixe cylindrique 41 de la poupée 37. A leur extrémité intérieure, ces conduits débouchent dans une gorge circulaire 61 qui se trouve en regard de perforations 62 réparties circonférentiellement à travers un manchon 63 qui est engagé sur le corps de broche 43 et qui en est solidaire. Ce manchon 63 se prolonge à son extrémité arrière par un cylindre 64 qui limite une chambre pneumatique et entoure un piston primaire 65 capable de coulisser axialement entre le corps de broche 43 et la paroi du cylindre 64. Ce piston comporte un prolongement engagé sur la surface externe du corps de broche 43. Des joints d'étanchéité 66 sont prévus aux deux extrémités du prolongement du piston 65 entre les faces internes de ce piston et les faces externes du corps de broche 43 ainsi qu'entre la face externe du piston 65 et la face interne du cylindre 64.

Ici également, la multiplication des forces due à la transmission hydraulique, est réalisée grâce au fait que l'on prévoit sur le corps de broche 43, en regard du piston primaire 65 deux portées 67 et 68 décalées axialement et ayant respectivement des diamètres D1 et D2, le diamètre D2 étant légèrement supérieur au diamètre D1. D'autre part, le piston 65 s'étend à cheval sur les deux portées 67 et 68 et présente donc entre son extrémité avant et son extrémité arrière une différence d'alésage correspondant à la différence entre le diamètre D2 et D1. Dans la partie centrale du piston 65 est prévue une noyure cylindrique 69. Le piston primaire 65 est commandé par l'air comprimé arrivant par les conduits 60. Cet air comprimé passe en effet à travers les forures 62 de la pièce 63 dont le diamètre extérieur est ajusté au diamètre d'alésage de la pièce 41, afin d'obtenir un jeu ajusté de façon semblable au jeu prévu entre l'alésage 8 dans la première forme d'exécution et le piston primaire. Dans ce cas toutefois, le diamètre de la pièce 63 étant inférieur à celui du piston primaire 65, les pertes d'air comprimé seront encore plus facile à contrôler. L'air comprimé passe ensuite dans un conduit annulaire 71 ménagé entre le corps de broche 43 et le manchon 63 pour parvenir dans la chambre pneumatique 72 qui est délimitée entre la face interne axiale du cylindre 64 et la face active 73 du piston primaire 65.

La chambre hydraulique primaire 70 est en communication par un conduit 74 ménagé dans la paroi du corps de broche 43 avec la chambre hydraulique secondaire 75 qui est délimitée entre la face axiale du cylindre 58 et la face active 76 du piston secondaire 56.

A part le fait que l'alimentation en air comprimé s'effectue à travers un jeu annulaire de diamètre réduit par le raccord tournant réalisé entre la gorge interne 61 du support de broche 41 et les trous 62 ménagés radialement dans le manchon 63 tournant avec la broche, le fonctionnement du dispositif de commande décrit est le même que celui du dispositif de la fig. 1. Lors d'un déplacement du piston 65, sous l'effet de la pression d'air s'excerçant sur la face 73, le volume de la chambre hydraulique primaire 70 varie, de sorte qu'une certaine masse d'huile est déplacée de la chambre primaire à la chambre secondaire ou vice versa. Comme la section de la chambre secondaire est un multiple de celle de la chambre primaire, le chemin du piston 56 est réduit dans la même proportion par rapport au chemin du piston 65. En revanche, comme la pression d'huile est la même dans les deux chambres, la force exercée par le piston 56 sur l'empilement de rondelles élastiques 55 est multipliée par rapport à celle qui s'exerce sur le piston 65. De cette façon, avec une pression d'air réduite, et par conséquent des pertes en air comprimé également réduites, on peut obtenir une commande progressive et sans à coups de l'ouverture de la pince 50 ou de sa fermeture en réglant simplement l'alimentation des conduits 60 en air comprimé. Cette alimentation peut être commandée par des moyens électroniques programmables de sorte que les commandes d'ouverture et de fermeture de la pince peuvent facilement être incorporées au programme d'une commande numérique du tour automatique. D'autre part, comme les forces mises en jeu s'exercent uniquement entre des pièces qui tournent avec la broche, on se rend compte que la mise en jeu de ces forces ne peut entraîner aucune réaction sur les paliers 38 et 39. Ils ne peuvent entraîner également aucune vibration ni aucune sollicitation exagérée d'aucune pièce. Par le fait que la transmission de la pression d'air de la poupée 37 fixe à la broche rotative s'effectue à travers le jeu cylindrique entre la gorge 61 et la surface cylindrique externe de la pièce 63 dans laquelle débouchent les trous 62, cette transmission s'effectue sans qu'il n'y ait aucune réaction dans le sens axial. Les conditions constructives sont donc favorables.

On notera d'autre part que les pertes d'huile sont également réduites au mininum par suite de la présence des joints 66 à tous les emplacements où une fuite pourrait se produire. Toute fuite du système hydraulique est automatiquement compensée par une avance du piston primaire, de sorte que les pressions sont maintenues.

Le dispositif de serrage décrit est susceptible de différentes applications. Ainsi la diposition de principe décrite en regard de la fig. 1 pourrait s'appliquer à des tours multi-broches par exemple, des pièces distinctes étant engagées par l'avant dans la pince de serrage à chaque changement de pièce. La réalisation décrite en regard de la fig. 2 concerne de préférence des tours automatiques usinant de la matière en barres.

## Revendications

1. Dispositif de serrage d'une pièce ou d'une barre de matériau à usiner entraînée en rotation dans une machine-outil, comprenant un bâti fixe (1; 37), une broche (4) montée rotativement dans ce bâti et des moyens de commande montés dans le bâti pour commander le dispositif,
dispositif dans lequel la broche comprend un corps de broche (5; 43) monté rotativement dans le bâti (1; 37), une pince (12; 30) et une douille de serrage (11; 47) montées coaxialement dans le corps de broche (5; 43) et mobiles axialement l'une par rapport à l'autre entre une position relative d'ouverture et une position relative de fermeture, un ressort de serrage (17; 55) sollicitant la pince ou la douille à la fermeture, et des moyens d'actionnement à fluide agissant à l'encontre du dit ressort et associés partiellement au corps de broche (5; 43) et partiellement au bâti (1; 37)
caractérisé en ce que les dits moyens d'actionnement comprennent, associés à la broche (5; 43),
des moyens d'actionnement hydropneumatiques formés par un piston primaire (19; 65) capable d'effectuer un déplacement limité, dans une chambre pneumatique (21; 72) sous l'effet d'une pression d'air, et un piston secondaire (20; 56) capable d'effectuer un déplacement limité, dans une chambre hydraulique (24; 75) sous l'effet du refoulement dans cette chambre, d'un liquide entraîné par le piston primaire (19; 65) lors de son déplacement, ce dernier étant plus grand que celui du piston secondaire (20; 56), et dans le bâti (1; 37) au moins un conduit fixe (27; 60) d'alimentation de la chambre pneumatique (21; 72) en air,
ce ou ces conduits traversant le bâti (1, 27), et une communication à jeu calibré étant prévue entre le ou les dits conduits fixes (27; 60) et la dite chambre pneumatique (21; 72).

2. Dispositif selon la revendication 1, caractérisé en ce que la chambre pneumatique (21; 72) est limitée partiellement par le corps de broche (5; 43) et partiellement par le dit piston primaire (19; 65), en ce qu'une chambre hydraulique auxiliaire (22; 70) est partiellement limitée par le corps de broche (5; 43) et par un prolongement (31; 69) du piston primaire (19; 65), et en ce que la dite chambre hydraulique (24; 75) est limitée partiellement par le corps de broche (5; 43) et par le piston secondaire (20; 56), ce dernier étant solidaire de la pince de serrage (12) ou de la douille (47).

3. Dispositif selon la revendication 2, caractérisé en ce que la section de la dite chambre hydraulique auxiliaire (22; 70) est plus petite que celle de la dite chambre hydraulique (24; 75).

4. Dispositif selon la revendication 3, caractérisé en ce que la section de la dite chambre hydraulique auxiliaire (22; 70) est plus petite que celle de la chambre pneumatique (21; 72).

5. Dispositif selon la revendication 1, caractérisé en ce que la chambre pneumatique (21) est fermée extérieurement par une paroi cylindrique fixe (1) faisant partie d'un support de broche, et en ce que le dit jeu calibré est ménagé entre la périphérie d'une partie en forme de disque du piston primaire (19) et la dite paroi cylindrique (1), celle-ci étant percée radialement du ou des conduits d'alimentation (27), et ceux-ci étant raccordés à une source fixe, d'air sous pression.

6. Dispositif selon la revendication 1, caractérisé en ce que la chambre pneumatique (72) est fermée extérieurement par une paroi cylindrique (64) solidaire du corps de broche (43), et en ce que le dit jeu calibré est ménagé entre une partie (41) d'un support de broche qui forme le bâti et qui est traversée radialement par le ou les conduits d'alimentation (60), ceux-ci étant raccordés à une source fixe d'air sous pression, et une partie (63) du corps de broche (43) qui communique par des passages (62) avec la chambre pneumatique (72), les dites parties (41; 63) ayant des diamètres différents mais tous deux inférieurs à celui de la dite paroi cylindrique (64).

7. Dispositif selon la revendication 2, caractérisé en ce que la dite chambre hydraulique auxiliaire (22; 70), délimitée par le corps de broche (5; 43) et par un prolongement tubulaire (31; 69) du piston primaire (19; 65) est fermée à ses deux extrémités et délimitée par deux portées et deux alésages correspondants, usinés en des emplacements adjacents respectivement sur le corps de broche et dans le dit prolongement du piston primaire, ces portées et alésages étant de diamètres ($D_1$, $D_2$) différents.

## Claims

1. Device for chucking a workpiece or a bar of material to be machined driven in rotation in a machine-tool comprising a fixed frame (1; 37), a spindle (4) mounted rotatingly within said frame and control means mounted in the frame for controlling the device,
device in which the spindle comprises a spindle body (5; 43) mounted rotatingly inside the frame (1; 37), a chuck (12; 30) and a chucking socket (11; 47) mounted coaxially in the spindle body (5; 43), and axially moveable relative to one another between a position related to opening and a position related to closing, a chucking spring (17; 55) causing the chuck or the chucking socket to close, and activating means with fluid acting against said spring and associated partially with the spindle body (5; 43) and partially with the frame (1; 37) characterized in that said activating means comprise, associated with the spindle (5; 43), hydropneumatic activating means formed by a primary piston (19; 65) capable of effecting a limited displacement, in a pneumatic chamber (21; 72) under the effect of air pressure, and a secondary piston (20; 56) capable of effecting a limited displacement, in a hydraulic chamber (24; 75) under the effect of forced flow in this chamber of a liquid driven by the primary piston (19; 65) at the time of its displacement, the last-mentioned being bigger than that of the secondary piston (20; 56), and within the frame (1; 37) one or more fixed conduits (27; 60) of air supply to the pneumatic chamber,

this or these conduits going through the frame (1, 27) and a passage of gauged clearance being foreseen between the one or more fixed conduits (27; 60) and the said pneumatic chamber (21; 72).

2. Device according to claim 1, characterized in that the pneumatic chamber (21; 72) is partially bounded by the spindle body (5; 43) and partially by the said primary piston (19; 65), in that an auxiliary hydraulic chamber (22; 70) is partially bounded by the spindle body (5; 43) and by a prolongation (31; 69) of the primary piston (19; 65), and in that the said hydraulic chamber (24; 75) is partially bounded by the spindle body (5; 43) and by the secondary piston (20; 56), the last-mentioned being integral with the chuck (12) or the chucking socket (47).

3. Device according to claim 2, characterized in that the cross section of the said auxiliary hydraulic chamber (22; 70) is smaller than that of the said hydraulic chamber.

4. Device according to claim 3, characterized in that the cross section of the said auxiliary hydraulic chamber (22; 70) is smaller than that of the pneumatic chamber (21; 72).

5. Device according to claim 1, characterized in that the pneumatic chamber (21) is outwardly closed off by a fixed cylindrical wall (1) building part of a spindle support, and in that the said gauged clearance is provided between the periphery of a disk-shaped part of the primary piston (19) and the said cylindrical wall (1), this wall being pierced radially by the one or more supply conduits (27), and these conduits being connected to a fixed source of pressurized air.

6. The device according to claim 1, characterized in that the pneumatic chamber (72) is outwardly closed off by a cylindrical wall (64) integral with the spindle body (43) and in that the said gauged clearance is provided between a part (41) of a support of the spindle which forms the frame and which is pierced radially by the one or more supply conduits (60), these being connected to a fixed source of pressurized air, and a part (63) of the spindle body (43) which is linked by passages (62) with the pneumatic chamber (72), the said parts (41; 63) having different diameters but both less than that of the said cylindrical wall (64).

7. The device according to claim 2, characterized in that the said auxiliary hydraulic chamber (22; 70), demarcated by the spindle body (5; 43) and by a tubular prolongation (31; 69) of the primary piston (19; 65), is closed off at its two extremities and demarcated by two supporting surfaces and two corresponding bores machined at locations respectively adjacent to the spindle body and within the said prolongation of the primary piston, the supporting surfaces and bores being of different diameters ($D_1$, $D_2$).

## Patentansprüche

1. Vorrichtung zum Spannen eines durch eine Werkzeugmaschine in Rotation versetzten Werkstückes oder einer zu bearbeitenden Materialstange, wobei ein feststehendes Gestell (1, 37), eine drehbar in dem Gestell untergebrachte Spindel (4) und in dem Gestell untergebrachte Steuermittel zum Steuern der Vorrichtung vorhanden sind,

wobei die Spindel der Vorrichtung einen drehbar im Gestell (1, 37) untergebrachten Spindelkörper (5, 43), eine Zange (12, 30) und eine Spannhülse (11, 47) umfaßt, welche beiden letzteren koaxial im Spindelkörper (5, 43) untergebracht und gegeneinander zwischen einer relativen Öffnungsposition und einer relativen Schließposition axial verschiebbar sind, mit einer die Zange oder die Spannhülse in die Schließstellung bringenden Spannfeder (17, 55) und mit fluidbetriebenen Betätigungsmitteln, welche gegen die besagte Feder wirken und teilweise dem Spindelkörper (5, 43) und teilweise dem Gestell (1, 37) angefügt sind,

dadurch gekennzeichnet, daß die besagten Betätigungsmittel ausgerüstet sind mit zu dem Spindelkörper (5, 43) hinzugefügten hydropneumatischen Betätigungsmitteln, welche gebildet werden durch einen Primärkolben (19, 65), der in der Lage ist, in einer pneumatischen Kammer (21, 72) unter Luftdruck eine begrenzte Verschiebung auszuführen, und einen Sekundärkolben (20, 56), welcher in der Lage ist, in einer hydraulischen Kammer (24, 75) beim Füllen dieser Kammer eine begrenzte Verschiebung auszuführen, eine durch die Verschiebung des Primärkolbens (19, 65) in Bewegung gesetzte Flüssigkeit, wobei die Verschiebung des Primärkolbens größer ist als diejenige des Sekundärkolbens (20, 56) und wobei innerhalb des Gestells (1, 37) wenigstens eine feststehende Leitung (27, 60) zur Versorgung der Pneumatikkammer (21, 72) mit Luft vorhanden ist,

wobei die eine oder mehreren Leitungen das Gestell (1, 27) durchlaufen und eine Verbindung mit kalibriertem Spalt zwischen der oder den feststehenden Leitungen (27, 60) und der besagten pneumatischen Kammer (21, 72) vorgesehen ist.

2. Vorrichtung nach Anspruch 1, dadurch gekennzeichnet, daß die pneumatische Kammer (21, 72) einerseits durch den Spindelkörper (5, 43) und andererseits durch den besagten Primärkolben (19, 65) begrenzt ist, daß eine hydraulische Hilfskammer (22, 70) einerseits durch den Spindelkörper (5, 43) und andererseits durch eine Verlängerung (31, 79) des Primärkolbens (19, 65) begrenzt ist, und daß die besagte hydraulische Kammer (24, 75) einerseits durch den Spindelkörper (5, 43) und andererseits durch den Sekundärkolben (20, 56) begrenzt ist, wobei letzterer mit der Spannzange (12) oder der Hülse (47) verbunden ist.

3. Vorrichtung nach Anspruch 2, dadurch gekennzeichnet, daß der Querschnitt der besagten hydraulischen Hilfskammer (22, 70) kleiner ist als derjenige der besagten hydraulischen Kammer (24, 75).

4. Vorrichtung nach Anspruch 3, dadurch gekennzeichnet, daß der Querschnitt der besagten hydraulischen Hilfskammer (22, 70) kleiner ist als derjenige der pneumatischen Kammer (21, 72).

5. Vorrichtung nach Anspruch 1, dadurch gekennzeichnet, daß die pneumatische Kammer (21) nach außen verschlossen ist durch eine feste zylindrische Wand (1), welche Teil eines Spindelträgers ist, und daß der besagte kalibrierte Spalt gebildet ist zwischen dem Umfang eines scheibenförmigen Bereiches des Primärkolbens (19) und der besagten zylindrischen Wand (1), die in radialer Richtung von der oder den Versorgungsleitungen (27) durchsetzt ist, welche an eine feststehende Druckluftquelle angeschlossen sind.

6. Vorrichtung nach Anspruch 1, dadurch gekennzeichnet, daß die pneumatische Kammer (72) nach außen durch eine fest mit dem Spindelkörper (43) verbundene zylindrische Wand (64) abgeschlossen ist, und daß der besagte kalibrierte Spalt vorgesehen ist zwischen einem Bereich (41) eines das Gestell bildenden Spindelträgers, der in radialer Richtung von der oder den Versorgungsleitungen (60) durchquert wird, welche an eine feststehende Druckluftquelle angeschlossen sind, und einem Bereich (63) des Spindelkörpers (43), der über die Durchtritte (62) mit der pneumatischen Kammer (72) verbunden ist, wobei die besagten Bereiche (41, 63) verschiedene Durchmesser aufweisen, welche beide unterhalb desjenigen der besagten zylindrischen Wand (64) liegen.

7. Vorrichtung nach Anspruch 2, dadurch gekennzeichnet, daß die besagte hydraulische Hilfskammer (22, 70), welche durch den Spindelkörper (5, 53) und eine rohrförmige Verlängerung (31, 69) des Primärkolbens (19, 65) begrenzt ist, an ihren Stirnflächen geschlossen ist und begrenzt ist durch zwei Zapfen und zwei entsprechende Bohrungen, welche an entsprechend benachbarten Stellen auf dem Spindelkörper und in der besagten Verlängerung des Primärkolbens vorgesehen sind, und daß diese Zapfen und Bohrungen verschiedene Durchmesser (D1, D2) besitzen.

FIG. 1

# FIG. 2

EP 0 213 075 B1